# FASCICULE DE BREVET EUROPEEN

(11) **EP 2 875 549 B1**
(45) Date de publication et mention de la délivrance du brevet: **06.05.2020**
(21) Numéro de dépôt: 13740000.8
(22) Date de dépôt: 23.07.2013
(51) Int. Cl.: H01P 1/387, H01P 3/00, H01P 3/08, H01G 4/33, H01L 51/00, H01H 1/00

(54) **COMPOSANTS MICRO-ÉLECTRONIQUES PASSIFS, APTES À LAISSER CIRCULER UN SIGNAL RADIOFRÉQUENCE OU HYPERFRÉQUENCE SELON UNE SEULE DIRECTION**
PASSIVE MIKROELEKTRONISCHE KOMPONENTEN ZUM MONODIREKTIONALEN LAUF EINES RADIOFREQUENZ- ODER HYPERFREQUENZSIGNALS
PASSIVE MICROELECTRONIC COMPONENTS, CAPABLE OF ALLOWING A RADIO-FREQUENCY OR HYPER-FREQUENCY SIGNAL TO TRAVEL IN A SINGLE DIRECTION

(30) Priorité: 23.07.2012 FR 1202083
(43) Date de publication de la demande: 27.05.2015
(73) Titulaire: THALES, 92200 Neuilly-sur-Seine (FR)
(72) Inventeur: ZIAEI, Afshin, F-91767 Palaiseau (FR); LE BAILLIF, Matthieu, F-91767 Palaiseau (FR); BANSROPUN, Shailendra, F-91767 Palaiseau (FR); MARTINS, Paolo, F-91767 Palaiseau (FR)
(74) Mandataire: Lavoix
(86) Numéro de dépôt international: PCT/EP2013/065495
(87) Numéro de publication internationale: WO 2014/016285

(56) Documents cités:
- EP-A1- 2 110 881
- US-A1- 2007 158 768
- US-A1- 2012 146 743
- YI-LI XU ET AL: "Electrical characteristics of graphene for nano-sized coplanar waveguide", CROSS STRAIT QUAD-REGIONAL RADIO SCIENCE AND WIRELESS TECHNOLOGY CONFERENCE (CSQRWC), 2011, IEEE, 26 juillet 2011 (2011-07-26), pages 701-704, XP032056860, DOI: 10.1109/CSQRWC.2011.6037048 ISBN: 978-1-4244-9792-8
- HIEROLD C ET AL: "CNT based nano electro mechanical systems (NEMS)", MICRO-NANOMECHATRONICS AND HUMAN SCIENCE, 2005 IEEE INTERNATIONAL SYMP OSIUM ON NOV. 7, 2005, PISCATAWAY, NJ, USA,IEEE, 7 novembre 2005 (2005-11-07), pages 1-4, XP010890595, DOI: 10.1109/MHS.2005.1589954 ISBN: 978-0-7803-9482-7
- DIMITRIOS L SOUNAS ET AL: "Graphene-based non-reciprocal spatial isolator", ANTENNAS AND PROPAGATION (APSURSI), 2011 IEEE INTERNATIONAL SYMPOSIUM ON, IEEE, 3 juillet 2011 (2011-07-03), pages 1597-1600, XP032043794, DOI: 10.1109/APS.2011.5996606 ISBN: 978-1-4244-9562-7

## Description

La présente invention concerne des composants micro-électroniques passifs, aptes à laisser circuler un signal radiofréquence ou hyperfréquence selon une seule direction.

L'invention se situe dans le domaine général des composants micro-électroniques pour circuit intégré, et trouve des applications dans les systèmes de télécommunications radiofréquence ou hyperfréquence tels que les systèmes radar ou la téléphonie sans fil.

En général, les composants radiofréquence ou hyperfréquence, de type ohmique ou capacitif, n'ont pas de direction de transmission particulière associée. Ainsi par exemple une ligne de transmission de type micro-ruban selon l'état de la technique, peut être branchée indifféremment entre une ligne radiofréquence d'entrée provenant d'une source radiofréquence et une ligne radiofréquence de sortie.

Pour certaines applications, il est important que le signal radiofréquence ou hyperfréquence ne puisse pas retourner vers la source dont il provient.

Afin de répondre à ce besoin, des composants radiofréquence appelés circulateurs radiofréquence ont été développés. Un circulateur radiofréquence est un dispositif à n ports, permettant à un signal radiofréquence de circuler seulement selon une direction donnée, dite direction de circulation, entre un port d'entrée et un port de sortie. Le signal radiofréquence est transmis quasiment sans perte dans la direction de circulation, et les ondes réfléchies sont fortement atténuées. On appelle également cette propriété la non-réciprocité de transmission du composant.

Des circulateurs utilisant une structure à ferrite et à aimant permanent imposant un sens de giration électromagnétique ont été proposés dans l'état de la technique, mais ce type de circulateur présente l'inconvénient d'être encombrant et coûteux.

Alternativement, la demande de brevet FR 06 04857 décrit un circulateur radiofréquence ou hyperfréquence à base de micro-commutateurs, ce qui réduit largement son encombrement. Néanmoins, même en utilisant la technologie décrite dans ce document, il est nécessaire de fabriquer un composant circulateur spécifique pour obtenir la propriété de non-réciprocité.

La demande de brevet US2012/146743 A1 décrit un composant micro-électronique passif de type ligne à ruban, paramétrable en tension et apte à faire varier la phase du signal transmis.

L'article « Electrical characteristics of graphene for nano-sized coplanar waveguide » de Yi-Li Xiu et al, publié dans "Cross Strait Quad-Regional Radio Science and Wireless Technology Conférence", en juillet 2011, décrit les propriétés de polarisation du graphène.

La demande de brevet US2007/158768 A1 décrit un micro-commutateur électronique comportant des contacts formés de nanotubes de carbone.

Il est donc souhaitable d'obtenir des composants radiofréquence ayant la propriété de non-réciprocité à plus faible coût de fabrication, tout en conservant un faible encombrement.

A cet effet, l'invention propose un composant micro-électronique radiofréquence passif non-réciproque selon la revendication 1.

Avantageusement, l'invention propose d'exploiter les propriétés de polarisation électromagnétique d'un signal radiofréquence ou hyperfréquence par une couche de graphène pour rendre divers composants micro-électroniques radiofréquence passifs aptes à transmettre un signal radiofréquence ou hyperfréquence selon une direction privilégiée.

En effet, le graphène est un cristal bidimensionnel monoplan de carbone, dont l'empilement constitue le graphite. Il a été montré qu'une couche unique de graphène présente une bonne conduction électrique et une propriété de polarisation d'un champ électromagnétique à travers la couche, l'angle de rotation associé à la polarisation étant dépendant d'un potentiel électrique appliqué à la couche de graphène. Ainsi, le sens et l'intensité de la polarisation déterminent une direction de transmission préférentielle du signal radiofréquence ou hyperfréquence et par conséquent, une direction d'atténuation de celui-ci.

Avantageusement, une ou plusieurs couches de graphène sont aisées à intégrer dans un procédé de fabrication d'un composant micro-électronique.

Le composant micro-électronique passif selon l'invention peut également présenter une ou plusieurs des caractéristiques selon les revendications dépendantes 2 à 8.

D'autres caractéristiques et avantages de l'invention ressortiront de la description qui en est donnée ci-dessous, à titre indicatif et nullement limitatif, en référence aux figures annexées, parmi lesquelles :
- la figure 1 représente une feuille de graphène et illustre la propriété de polarisation du graphène ;
- la figure 2 est un exemple de ligne de transmission de type coplanaire ;
- la figure 3 est un exemple de ligne de transmission de type micro-ruban ;
- la figure 4 est une vue en coupe longitudinale d'une ligne de transmission non-réciproque ;
- la figure 5 est une vue en coupe d'une capacité de type MIM ;
- la figure 6 est une vue en coupe d'une capacité MIM non-réciproque ;
- la figure 7 est une vue du dessus et une vue de coupe d'un micro-commutateur, et
- la figure 8 est une vue du dessus et une vue de coupe d'un micro-commutateur non-réciproque ;
- la figure 9 illustre une portion de composant micro-électronique non réciproque selon l'invention.

Le principe de l'invention consiste à rajouter une ou plusieurs couches de graphène dans un composant micro-électronique passif de type ohmique ou capacitif, les couches de graphène étant positionnées de manière à exploiter la propriété de polarisation du graphène pour rendre le composant micro-électronique non-réciproque, donc passant selon une direction et non passant selon la direction opposée.

L'invention sera décrite dans son application à divers composants micro-électroniques passifs qui sont des lignes de transmission, des capacités et des micro-commutateurs.

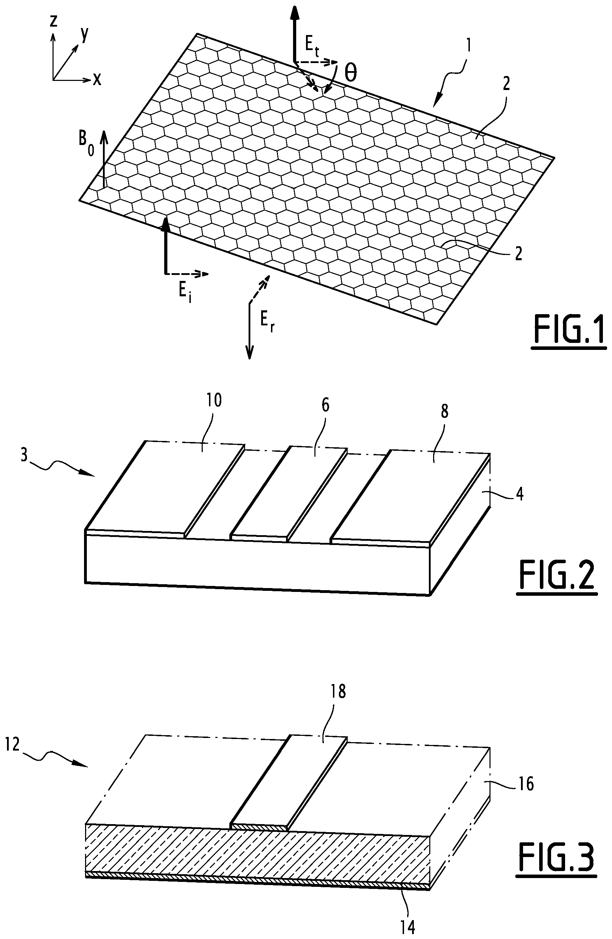

La figure 1 illustre une feuille de graphène 1 composée de cristaux hexagonaux de carbone 2, d'épaisseur mono-atomique. Les composantes du champ électrique E et magnétique B sont représentées dans un référentiel tridimensionnel (x,y,z), afin d'illustrer la rotation du champ électrique lors du passage d'un signal radiofréquence ou hyperfréquence à travers la feuille de graphène 1, lorsqu'elle est polarisée par application d'un potentiel électrique. Selon le niveau de potentiel électrique appliqué au niveau de la couche de graphène 1, la composante Ei du champ électrique subit une rotation d'un angle θ.

L'angle de polarisation et l'intensité de polarisation, dépendants du niveau de potentiel appliqué à la feuille de graphène, déterminent une direction de transmission préférentielle et engendrent le phénomène de non-réciprocité, selon lequel la transmission dans la direction opposée à la direction préférentielle est fortement atténuée par des pertes.

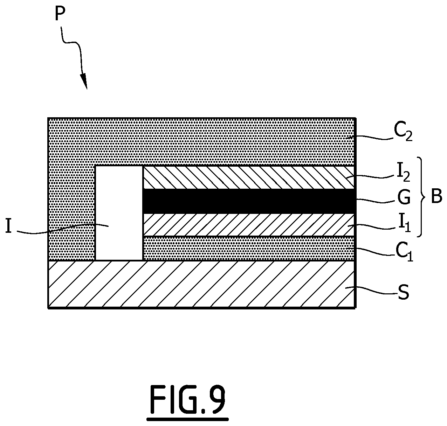

La figure 9 illustre une portion P de composant micro-électronique passif pour circuit intégré selon l'invention.

La portion P, qui est représentée en coupe, comprend un substrat diélectrique S, une première partie conductrice métallique C1 et une deuxième partie conductrice métallique C2. La première partie métallique conductrice C1 est posée sur le substrat S. Les parties conductrices C1 et C2 sont séparées par une coupure d'isolation I, qui est en pratique un espace libre.

Selon le principe de l'invention, un ou plusieurs ensembles B de couches supplémentaires sont ajoutés dans l'espace d'isolation I, entre les parties métalliques conductrices C1 et C2. L'ensemble B comprend au moins une couche de graphène G. Il peut également comprendre une première couche intermédiaire I₁, par exemple un couche diélectrique, positionnée sous la couche de graphène G et une couche intermédiaire I₂, positionnée au-dessus de la couche de graphène. Les couches intermédiaires I₁ et I₂ sont optionnelles, selon le mode de réalisation envisagé, comme décrit ci-après.

Ainsi, au moins une couche de graphène est disposée entre les parties métalliques conductrices C1 et C2.

Tout composant micro-électronique passif intégrant une portion P telle que décrite ci-dessus devient non réciproque. En effet, la couche de graphène G ajoutée est apte à transmettre un signal radiofréquence ou hyperfréquence transmis entre la première partie conductrice C1 et la deuxième partie conductrice C2 selon une première direction et à l'atténuer selon une deuxième direction, opposée à la première direction.

L'utilisation d'une portion de composant micro-électronique tel que décrit ci-dessus dans divers composants micro-électroniques passifs qui sont des lignes de transmission, des capacités et des micro-commutateurs, sera décrite plus en détail.

La figure 2 illustre une ligne de transmission de type ligne coplanaire 3 selon l'état de la technique, largement utilisée dans des circuits intégrés, composée d'un substrat diélectrique 4, d'un micro-ruban conducteur 6, et de deux plans de masse 8, 10, situés sur la même face du composant que le micro-ruban.

La figure 3 illustre une ligne de transmission de type ligne micro-ruban 12, également largement utilisée dans les circuits intégrés, comportant un plan de masse 14, un substrat diélectrique 16 et un ruban conducteur 18.

Ces lignes de transmission 3, 12 sont aptes à être connectées entre une ligne radiofréquence d'entrée dite source et une ligne radiofréquence de sortie dite charge, non représentées sur les figures, et à transmettre un signal radiofréquence ou hyperfréquence entre la source et la charge.

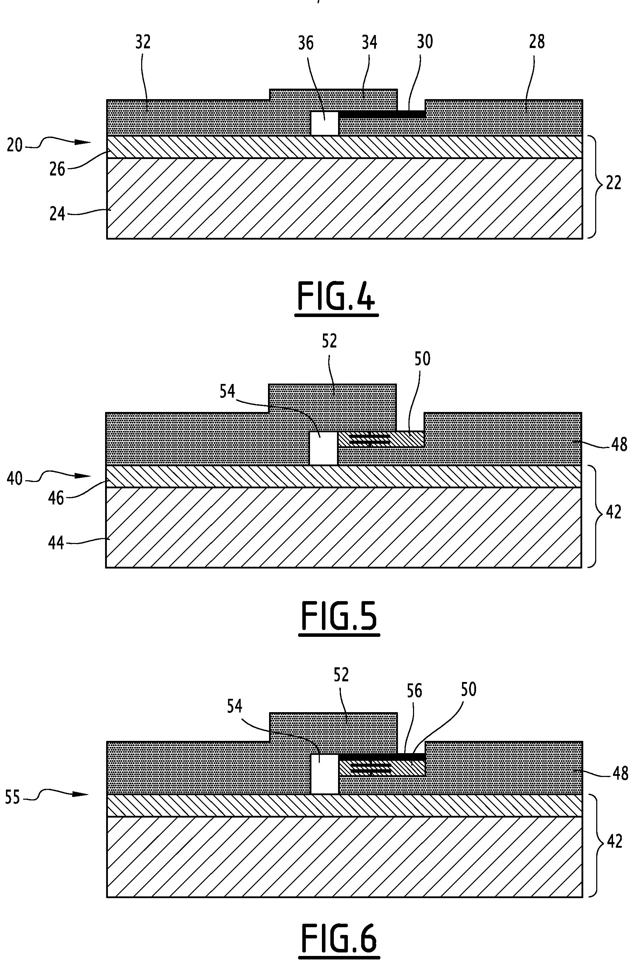

Afin de rendre ces lignes de transmission 3, 12 non-réciproques, en instaurant une première direction de transmission préférentielle et une deuxième direction de transmission fortement atténuée, la deuxième direction étant opposée à la première direction, une ou plusieurs couches de graphène sont insérées en série comme illustré à la figure 4, qui représente une vue en coupe longitudinale de la ligne centrale d'une ligne de transmission coplanaire 3. Une couche de graphène est constituée d'une ou plusieurs feuilles de graphène 1 superposées.

Une mise en oeuvre tout à fait analogue s'applique avec la ligne de transmission de type micro-ruban 12.

Dans la vue en coupe 20 de la ligne de transmission 3 est représenté l'empilement de couches minces formant la partie centrale de la ligne de transmission. Le substrat 22, correspondant au substrat 4 de la figure 2, est composé dans ce mode de réalisation d'une première couche 24 et d'une deuxième couche de passivation 26, superposée à la couche 24. Par exemple, la couche 24 est en silicium haute résistivité et la couche 26 est en dioxyde de silicium (silice). Une première partie conductrice métallique 28, faisant partie du micro-ruban conducteur 6, est posée sur le substrat.

Une couche de graphène 30 composée d'une feuille de graphène recouvre en partie la première partie conductrice métallique 28.

En variante, la couche 30 est composée de plusieurs feuilles de graphène superposées, afin d'augmenter l'effet de polarisation et l'effet de non-réciprocité de la transmission qui en découle.

La couche de graphène 30 est en contact avec une deuxième partie conductrice métallique 32 faisant partie du micro-ruban conducteur 6, via un pont 34 qui prolonge la partie conductrice 32 et recouvre partiellement la feuille de graphène 30.

Les parties conductrices 28, 32 sont séparées par une coupure d'isolation 36, qui sépare les deux parties métalliques.

Dans un mode de réalisation, les parties métalliques 28 et 32 sont en métal conducteur, typiquement de l'or (Au).

Lorsqu'un potentiel est appliqué à la couche de graphène 30 à travers d'électrodes non représentées sur la figure 4, elle est polarisée, ce qui a pour effet, comme expliqué ci-dessus, de définir une direction de transmission préférentielle d'un signal radiofréquence ou hyperfréquence.

La figure 5 illustre, en coupe transversale, un autre composant micro-électronique passif qui est une capacité de type Métal-Isolant-Métal (MIM).

La capacité 40 comprend un substrat 42, composé dans ce mode de réalisation d'une première couche 44 et d'une deuxième couche de passivation 46, superposée à la couche 44. Ces couches de substrat sont analogues aux substrats déjà décrits en référence aux figures 2 et 3 pour les lignes de transmission.

La capacité 40 comporte également une première partie conductrice métallique qui est une couche métallique 48, une couche de diélectrique 50 et une deuxième partie conductrice métallique qui est une couche métallique 52. Les deux couches métalliques 48, 52 constituent les armatures de la capacité 40. La couche de diélectrique 50 est en contact, sur une partie de sa surface, d'une partie de la première couche 48 et sur une autre partie de sa surface, d'une partie de la deuxième couche métallique 52. Une coupure d'isolation 54 est aménagée entre la première couche conductrice métallique 48 et la deuxième couche conductrice métallique 52, sur toute l'épaisseur de manière à former une isolation et à obtenir l'effet capacitif à travers le diélectrique 50.

Le diélectrique 50 est composé par exemple, de manière non limitative, d'oxyde de silicium (SiO₂) ou de nitrure de silicium (Si₃N₄). En variante, tout autre matériau diélectrique connu peut être utilisé.

Les parties métalliques 48, 52 sont en métal conducteur, typiquement en or (Au).

La fabrication d'un tel composant capacitif est réalisée par des techniques connues comme par exemple l'épitaxie ou croissance de couches.

Avantageusement, il est aisé d'intégrer à de tels procédés de fabrication l'ajout d'une ou plusieurs couches de graphène pour réaliser un composant capacitif non-réciproque selon l'invention, dont un exemple en vue de coupe est illustré à la figure 6. En effet, une couche de graphène est par exemple fabriquée par épitaxie à partir de carbure de silicium.

Un composant capacitif non-réciproque 55 illustré en vue de coupe à la figure 6, comporte, en plus des éléments déjà décrits pour un composant capacitif classique, une ou plusieurs couches de graphène 56, positionnées en contact avec le diélectrique 50.

De préférence, la couche de graphène est positionnée en « sandwich » par rapport à la couche diélectrique 50, et se situe soit au-dessus de la couche diélectrique comme illustré sur la figure 6, soit en-dessous.

Dans le cas alternatif où plusieurs couches de graphène sont prévues, elles sont par exemple positionnées en alternance avec des couches de diélectrique. Avantageusement, l'insertion de plusieurs couches de graphène permet d'augmenter l'effet de non-réciprocité du composant lorsqu'elles sont polarisées par application d'un potentiel électrique. Les couches de graphène sont soit reliées à une même source de potentiel, soit reliées chacune à une source de potentiel séparée. Les diverses couches empilées sont fabriquées successivement. Par exemple, lorsqu'une couche de graphène est ajoutée au milieu de la couche diélectrique, cinq étapes de fabrication sont mises en œuvre pour fabriquer respectivement les couches de (métal, diélectrique, graphène, diélectrique, métal) du composant.

De préférence, la couche de graphène a les mêmes dimensions en longueur et en largeur que la couche diélectrique 50.

De manière similaire, il est possible de rendre une capacité de type capacité interdigitée non-réciproque, en appliquant une ou plusieurs feuilles de graphène en recouvrement sur les doigts d'un ou des deux peignes positionnés en regard. Similairement au mode de réalisation de la capacité MIM explicité ci-dessus en référence à la figure 6, la ou les feuilles de graphène sont alors en contact avec le diélectrique qui est l'air dans ce cas de figure et permettent de favoriser la transmission d'un signal radiofréquence ou hyperfréquence selon un sens donné lorsqu'elles sont polarisées par application d'un potentiel.

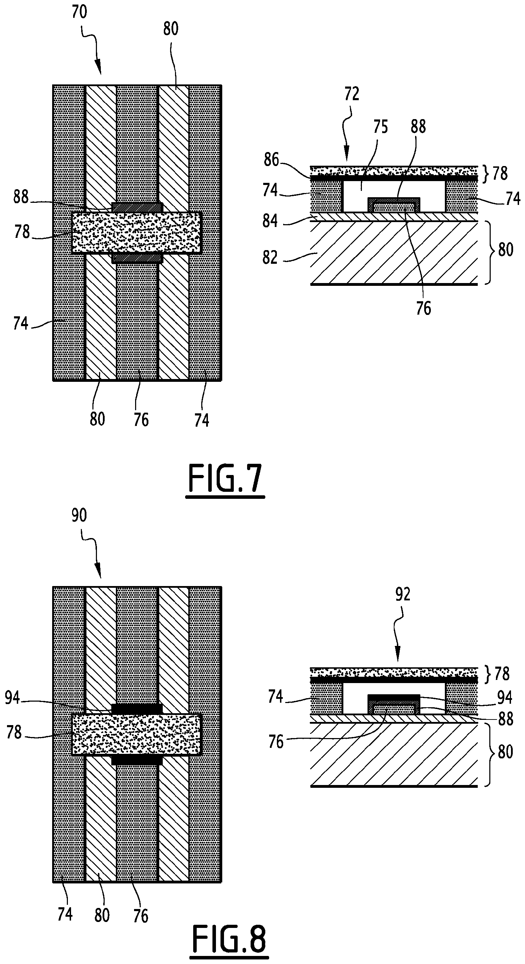

La figure 7 illustre un autre composant passif qu'il est possible de rendre non-réciproque qui est un micro-commutateur MEMS (Micro Electro-Mechanical System) radiofréquence ou hyperfréquence.

La figure 7 illustre une vue du dessus 70 et une vue en coupe transversale 72 d'un micro-commutateur MEMS, qui réalise une fonction de commutation via une membrane métallique déformable, en contact avec des parties conductrices isolées entre elles, la membrane venant établir un contact lorsqu'elle est soumise à une différence de potentiel.

Comme illustré sur la figure 7, les parties ou couches conductrices métalliques 74 sont isolées entre elles, séparées par un espace vide 75, l'air jouant le rôle d'isolant. Une première partie métallique conductrice ou contact métallique central 76 permet de réaliser un court-circuit lorsqu'une membrane 78 est à l'état bas. Les couches conductrices 74, 76 sont apposées sur un substrat 80, comportant préférentiellement deux couches, une première couche 82 et une deuxième couche de passivation 84, superposée à la couche 82, comme expliqué ci-dessus en référence aux autres composants passifs décrits.

La membrane 78 est reliée au plan de masse par un contact 86.

Une couche diélectrique 88 est disposée au-dessus du contact métallique central 76.

Lorsque le commutateur MEMS est actionné, la membrane 78 s'abaisse et se pose sur le diélectrique 88 et forme ainsi un contact capacitif entre le contact 76 et le plan de masse via le contact 86. Cette configuration est similaire à la configuration de la capacité MIM décrite ci-dessus en référence aux figures 5 et 6, la fonction de la deuxième couche métallique étant réalisée par la membrane métallique 78 à l'état abaissé.

Classiquement, la membrane 78 est en métal conducteur, typiquement de l'or (Au).

La figure 8 illustre, en vue du dessus 90 et en coupe transversale 92 un micro-commutateur du type de celui de la figure 7 amélioré par ajout d'une couche de graphène.

Les références de la figure 7 sont reprises pour désigner les mêmes éléments. En supplément des éléments du micro-commutateur MEMS de la figure 7, une couche de graphène 94 est ajoutée en contact avec le diélectrique 88.

Dans le mode de réalisation illustré à la figure 8, la couche de graphène est positionnée au-dessus du diélectrique 88 et a les mêmes dimensions.

Dans un mode de réalisation alternatif, la couche de graphène 94, formée d'une ou plusieurs feuilles de graphène, est posée au-dessus du contact électrique et en dessous du diélectrique 88.

Dans un autre mode de réalisation alternatif, une superposition de plusieurs couches alternées de diélectrique et de graphène est réalisée.

Avantageusement, grâce à la couche de graphène ou à la pluralité de couches de graphène, le couplage entre le contact 86 et le plan de masse est rendu non-réciproque, et par conséquent l'isolation est améliorée et la puissance n'est plus réfléchie sur le plan de masse, elle est absorbée. Ainsi, la capacité de commutation de ce composant est augmentée.

Il est envisagé, de manière analogue, d'ajouter une ou plusieurs couches de graphène dans un commutateur MEMS capacitif de type série.

Avantageusement, les composants micro-électroniques passifs décrits ci-dessus sont rendus non-réciproques par ajout d'une ou plusieurs couches de graphène. L'encombrement de ces composants micro-électroniques reste faible, dans la mesure où une ou plusieurs couches de graphène ont une très faible épaisseur. Les composants non-réciproques obtenus ont des dimensions similaires aux dimensions des composants classiques qui n'ont pas de sens de circulation du signal radiofréquence ou hyperfréquence privilégié.

La fabrication de composants micro-électroniques passifs avec ajout d'une ou plusieurs couches de graphène est aisée, car elle comporte simplement l'ajout de couches supplémentaires dans l'empilement de couches constituant de tels composants.

## Revendications

1. Composant micro-électronique radiofréquence passif pour circuit intégré comportant un substrat diélectrique (S, 22, 42, 80) et au moins une couche conductrice métallique disposée sur ledit substrat, ladite couche conductrice comportant au moins une première partie conductrice métallique (C1, 28, 48, 76) et une deuxième partie conductrice métallique (C2, 32, 52, 74) séparées par une isolation (I, 36, 54, 75),
**caractérisé en ce qu'**il comporte au moins un ensemble (B) de couches supplémentaires (B) comportant une couche de graphène (G, 30, 56, 94) entre une première couche diélectrique intermédiaire (I₁) et une deuxième couche diélectrique intermédiaire (I₂), ledit ensemble (B) étant disposé entre la première partie conductrice métallique et la deuxième partie conductrice métallique, ledit au moins un ensemble (B) de couches supplémentaires recouvrant en partie ladite première partie conductrice métallique (C1) et étant relié à ladite deuxième partie conductrice métallique (C2) via un pont métallique qui prolonge ladite deuxième partie conductrice métallique (C2) et recouvre partiellement ledit au moins un ensemble (B) de couches supplémentaires,
de manière à ce qu'un signal radiofréquence ou hyperfréquence traverse ladite au moins une couche de graphène (G, 30, 56, 94) lorsqu'il est transmis entre ladite première partie conductrice métallique et ladite deuxième partie conductrice métallique, ladite couche de graphène (G, 30, 56, 94) étant apte, lorsqu'elle est soumise à un potentiel électrique, à transmettre ledit signal radiofréquence ou hyperfréquence selon une première direction et à atténuer ledit signal radiofréquence ou hyperfréquence selon une deuxième direction opposée à ladite première direction, le composant micro-électronique radiofréquence passif ainsi obtenu étant non-réciproque.

2. Composant micro-électronique radiofréquence passif selon la revendication 1 de type ligne de transmission (20).

3. Composant micro-électronique radiofréquence selon la revendication 1 de type capacitif (55).

4. Composant micro-électronique radiofréquence selon la revendication 3, **caractérisé en ce qu'**il comporte une pluralité de couches de diélectrique et de graphène alternées.

5. Composant micro-électronique radiofréquence selon la revendication 1 de type micro-commutateur (90, 92).

6. Composant micro-électronique radiofréquence selon la revendication 5, **caractérisé en ce qu'**il comporte une pluralité de couches de diélectrique et de graphène alternées.

7. Composant micro-électronique radiofréquence selon l'une quelconque des revendications 1à 6, **caractérisé en ce que** la ou les couches de graphène sont de mêmes dimensions en largeur et en longueur que lesdites couches diélectriques intermédiaires.

8. Composant micro-électronique radiofréquence selon l'une quelconque des revendications précédentes, **caractérisé en ce qu'**une dite couche de graphène (30, 56, 94) est composée d'une feuille de cristaux de carbone d'épaisseur mono-atomique.

## Patentansprüche

1. Passive mikroelektronische Radiofrequenz-Komponente für integrierten Schaltkreis, aufweisend ein dielektrisches Substrat (S, 22, 42, 80) und mindestens eine metallische leitende Schicht, die auf dem Substrat angeordnet ist, wobei die leitende Schicht mindestens einen ersten metallischen leitenden Abschnitt (C1, 28, 48, 76) und einen zweiten metallischen leitenden Abschnitt (C2, 32, 52, 74) aufweist, die durch eine Isolation (I, 36, 54, 75) getrennt sind,
**dadurch gekennzeichnet, dass** sie mindestens eine Einheit (B) zusätzlicher Schichten (B) aufweist, aufweisend eine Graphenschicht (G, 30, 56, 94) zwischen einer ersten dielektrischen Zwischenschicht (I₁) und einer zweiten dielektrischen Zwischenschicht (I₂), wobei die Einheit (B) zwischen dem ersten metallischen leitenden Abschnitt und dem zweiten metallischen leitenden Abschnitt angeordnet ist, wobei die mindestens eine Einheit (B) zusätzlicher Schichten den metallischen leitenden Abschnitt (C1) teilweise bedeckt und mit dem zweiten metallischen leitenden Abschnitt (C2) über eine metallische Brücke verbunden ist, die den zweiten metallischen leitenden Abschnitt (C2) verlängert und die mindestens eine Einheit (B) zusätzlicher Schichten teilweise bedeckt,
so dass ein Radiofrequenz- oder Hyperfrequenzsignal die mindestens eine Graphenschicht (G, 30, 56, 94) durchquert, wenn es zwischen dem ersten metallischen leitenden Abschnitt und dem zweiten metallischen leitenden Abschnitt übertragen wird, wobei die Graphenschicht (G, 30, 56, 94) imstande ist, wenn sie einem elektrischen Potential ausgesetzt wird, das Radiofrequenz- oder Hyperfrequenzsignal gemäß einer ersten Richtung zu übertragen und das Radiofrequenz- oder Hyperfrequenzsignal gemäß einer zweiten Richtung entgegengesetzt zur ersten Richtung abzuschwächen, wobei die derart erhaltene passive mikroelektronische Radiofrequenz-Komponente nicht-reziprok ist.

2. Passive mikroelektronische Radiofrequenz-Komponente nach Anspruch 1 vom Typ Übertragungsleitung (20).

3. Mikroelektronische Radiofrequenz-Komponente nach Anspruch 1 vom kapazitiven Typ (55).

4. Mikroelektronische Radiofrequenz-Komponente nach Anspruch 3, **dadurch gekennzeichnet, dass** sie eine Vielzahl abwechselnder dielektrischer und Graphenschichten aufweist.

5. Mikroelektronische Radiofrequenz-Komponente nach Anspruch 1 vom Typ MikroSchalter (90, 92).

6. Mikroelektronische Radiofrequenz-Komponente nach Anspruch 5, **dadurch gekennzeichnet, dass** sie eine Vielzahl abwechselnder dielektrischer und Graphenschichten aufweist.

7. Mikroelektronische Radiofrequenz-Komponente nach einem der Ansprüche 1 bis 6, **dadurch gekennzeichnet, dass** die Graphenschicht/en derselben Abmessungen in der Breite und in der Länge wie die dielektrischen Zwischenschichten sind.

8. Mikroelektronische Radiofrequenz-Komponente nach einem der vorangehenden Ansprüche, **dadurch gekennzeichnet, dass** eine Graphenschicht (30, 56, 94) aus einer Carbonkristallfolie in Monoatomstärke zusammengesetzt ist.

## Claims

1. A passive radiofrequency microelectronic component for an integrated circuit comprising a dielectric substrate (S, 22, 42, 80) and at least one metal conductive layer positioned on said substrate, said conductive layer comprising at least one first metal conductive portion (C1, 28, 48, 76) and a second metal conductive portion (C2, 32, 52, 74) separated by an insulation (I, 36, 54, 75),
**characterized in that** it comprises at least one set (B) of additional layers comprising one graphene layer (G, 30, 56, 94) between a first intermediate dielectric layer (I₁) and a second intermediate dielectric layer (I₂), said set (B) being positioned between the first metal conductive portion and the second metal conductive portion, said at least one set (B) of additional layers covering partly said first metal conductive portion (C1) and being connected to said second metal conductive portion (C2) via a metal bridge which extends said second conductive portion and covers partially said at least one set (B) of additional layers,
so that a radiofrequency or hyperfrequency signal crosses said at least one graphene layer (G, 30, 56, 94) when it is transmitted between said first metal conductive portion and said second metal conductive portion, said graphene layer (G, 30, 56, 94) being able, when it is subject to an electric potential, to transmit said radiofrequency or hyperfrequency signal along a first direction and to attenuate said radiofrequency or hyperfrequency signal according to a second direction opposite to said first direction, the passive radiofrequency microelectronic component obtained being non-reciprocal.

2. The passive radiofrequency microelectronic component according to claim 1 of the transmission line type (20).

3. The radiofrequency microelectronic component according to claim 1 of the capacitive type (55).

4. The radiofrequency microelectronic component according to claim 3, **characterized in that** it comprises a plurality of alternating dielectric and graphene layers.

5. The radiofrequency microelectronic component according to claim 1 of the micro-switch type (90, 92).

6. The radiofrequency microelectronic component according to claim 5, **characterized in that** it comprises a plurality of alternating dielectric and graphene layers.

7. The radiofrequency micro-electronic component according to any of claims 1 to 6, **characterized in that** the graphene layer(s) is(are) of the same dimensions in width and in length as said intermediate dielectric layers.

8. The radiofrequency microelectronic component according to any of the preceding claims, **characterized in that** a so called graphene layer (30, 56, 94) consists of a sheet of carbon crystals with a mono-atomic thickness.
